# EUROPÄISCHE PATENTSCHRIFT

(11) **EP 3 612 419 B1**
(45) Veröffentlichungstag und Bekanntmachung des Hinweises auf die Patenterteilung: **25.01.2023**
(21) Anmeldenummer: 18720764.2
(22) Anmeldetag: 18.04.2018
(51) Int. Cl.: B60T 8/32, B60T 13/74

(54) **VERFAHREN ZUM ERZEUGEN VON BREMSKRAFT DURCH BETÄTIGEN MINDESTENS EINES ELEKTRISCHEN BREMSMOTORS IN EINER FAHRZEUG-FESTSTELLBREMSE**
METHOD FOR GENERATING BRAKING POWER BY ACTUATING AT LEAST ONE ELECTRIC BRAKING MOTOR IN A VEHICLE PARKING BRAKE
PROCÉDÉ SERVANT À GÉNÉRER UNE FORCE DE FREINAGE PAR L'ACTIONNEMENT D'AU MOINS UN MOTEUR DE FREIN ÉLECTRIQUE DANS UN FREIN DE STATIONNEMENT DE VÉHICULE

(30) Priorität: 19.04.2017 DE 102017206608; 17.04.2018 DE 102018205811
(43) Veröffentlichungstag der Anmeldung: 26.02.2020
(73) Patentinhaber: Robert Bosch GmbH, 70442 Stuttgart (DE)
(72) Erfinder: BAEHRLE-MILLER, Frank, 71101 Schoenaich (DE); FRENZEL, Toni, 74081 Heilbronn (DE)
(86) Internationale Anmeldenummer: PCT/EP2018/059927
(87) Internationale Veröffentlichungsnummer: WO 2018/192986

(56) Entgegenhaltungen:
- WO-A2-2012/052380
- DE-A1-102004 004 992
- DE-A1-102007 031 819
- DE-A1-102007 059 684

## Beschreibung

Die Erfindung bezieht sich auf ein Verfahren zum Erzeugen von Bremskraft durch Betätigen mindestens eines elektrischen Bremsmotors in einer Fahrzeug-Feststellbremse.

### Stand der Technik

In der DE 10 2004 004 992 A1 wird ein Bremssystem für ein Fahrzeug beschrieben, das eine hydraulische Fahrzeugbremse und eine elektromechanische Feststellbremse mit einem elektrischen Bremsmotor umfasst. Der Bremsmotor der Feststellbremse ist in eine Radbremseinheit der hydraulischen Fahrzeugbremse integriert. Der elektrische Bremsmotor verstellt einen Bremskolben in Richtung auf eine Bremsscheibe, um das Fahrzeug im Stillstand festzusetzen. Bei einem regulären Bremsvorgang während der Fahrt wird der Bremskolben bei einer Betätigung der hydraulischen Fahrzeugbremse vom Bremsdruck beaufschlagt. Der elektrische Bremsmotor wird von einem Steuergerät eines ESP-Systems (Elektronisches Stabilitätsprogramm) angesteuert.

In der DE 10 2007 059 684 A1 wird ein System zum Betreiben einer elektromechanischen Parkbremse für ein Fahrzeug beschrieben, das zwei Steuereinheiten zum Auswerten eines Fahrerparkbremswunsches umfasst. Die beiden Steuereinheiten stehen mit einem Aktuator zum Betätigen der Parkbremse in Verbindung. Beim Auftreten eines Fehlers steuert eine mit Energie versorgte Steuereinheit den Aktuator in der Weise an, dass das Fahrzeug in einer Parkposition festgesetzt wird, sofern ein entsprechender Fahrerparkbremswunsch vorliegt.

In der EP 1 063 453 B1 wird eine Steuereinrichtung zur Realisierung einer automatischen Park- und Wegrollsperre für ein Kraftfahrzeug beschrieben. Die Steuereinrichtung umfasst ein Steuergerät und einen Aktuator, der von dem Steuergerät angesteuert wird, wenn aufgrund von Sensorsignalen eines Gurtschlosssensors, eines Sitzplatzbelegungssensors und/oder eines Motorhauben- oder Kofferraumklappenöffnungssensors festgestellt wird, dass der Fahrer das Fahrzeug verlassen hat oder zu verlassen wünscht.

Die DE 10 2007 031 819 A1 offenbart ein Feststellbremssystem für ein Kraftfahrzeug mit einem ersten und einem zweiten Steuergerät zur Ansteuerung eines Bremssteuermotors. Im Normalfall wird der Bremssteuermotor vom ersten Steuergerät angesteuert. Das zweite Steuergerät erzeugt ein Fehlersignal, falls der Bremssteuermotor nicht ordnungsgemäß arbeitet.

### Offenbarung der Erfindung

Mithilfe des erfindungsgemäßen Verfahrens kann Bremskraft durch Betätigen mindestens eines elektrischen Bremsmotors in einer Fahrzeug-Feststellbremse erzeugt werden. Die Bremskraft dient dazu, das Fahrzeug im Stillstand festzusetzen und gegen ein unbeabsichtigtes Wegrollen zu sichern. Gegebenenfalls kann mithilfe der Fahrzeug-Feststellbremse auch eine Bremskraft während des Fahrens des Fahrzeugs erzeugt werden, so dass die Geschwindigkeit des fahrenden Fahrzeugs verringert wird, insbesondere im niedrigen Geschwindigkeitsbereich, zum Beispiel während eines vom Fahrer oder automatisch durchgeführten Parkvorgangs.

Die Fahrzeug-Feststellbremse, auf die sich das Fahren bezieht, umfasst zumindest zwei Steuergeräte, über die mindestens ein Bremsmotor der Feststellbremse ansteuerbar ist. Der Bremsmotor ist bevorzugt in einer Radbremseinheit angeordnet und verstellt einen Bremskolben gegen eine Bremsscheibe. Vorteilhafterweise ist die Radbremseinheit Bestandteil einer hydraulischen Fahrzeugbremse im Fahrzeug, wobei bei einer Betätigung der hydraulischen Fahrzeugbremse der Kolben von dem hydraulischen Bremsdruck gegen die Bremsscheibe verstellt wird. In einer alternativen Ausführung ist es möglich, dass die Feststellbremse unabhängig und separat von der hydraulischen Fahrzeugbremse ausgebildet ist.

In der Fahrzeug-Feststellbremse sind zwei Steuergerät/Bremsmotor-Einheiten mit jeweils einem Steuergerät und einem Bremsmotor gebildet. Im regulären, voll funktionstüchtigen Betrieb der Feststellbremse wird bei einer entsprechenden Anforderung, welche entweder als Fahrerwunsch oder von einem Fahrerassistenzsystem generiert vorliegt, mindestens eine Steuergerät/Bremsmotor-Einheit angesteuert, um eine Bremskraft zu erzeugen. Die Steuergeräte der Feststellbremse kommunizieren miteinander, so dass Informationen von einem Steuergerät zum anderen Steuergerät ausgetauscht werden können.

Bei dem erfindungsgemäßen Verfahren wird bei einem Ausfall einer ersten Steuergerät/Bremsmotor-Einheit über das zweite Steuergerät selbsttätig die zweite Steuergerät/Bremsmotor-Einheit zur Erzeugung von Bremskraft in Gang gesetzt. Diese Erzeugung von Bremskraft erfolgt ohne Tätigwerden des Fahrers in selbsttätiger und automatisierter Weise, sofern als zusätzliche Bedingung die Fahrzeuggeschwindigkeit unterhalb eines zugeordneten Grenzwerts liegt und/oder eine Kenngröße im Fahrzeug auf einen bereits bestehenden oder zumindest bevorstehenden Fahrzeugstillstand hinweist. Nur für diesen Fall erfolgt die selbsttätige Ansteuerung des mindestens einen Bremsmotors über das zweite, funktionstüchtige Steuergerät, das gemeinsam mit einem ebenfalls funktionstüchtigen Bremsmotor die zweite Steuergerät/Bremsmotor-Einheit bildet. Die zusätzliche Bedingung stellt sicher, dass das Fahrzeug sich bereits im Stillstand befindet oder zumindest sich nur mit einer verhältnismäßig geringen Geschwindigkeit unterhalb des Geschwindigkeitsgrenzwerts bewegt.

Alternativ zur Geschwindigkeitsbetrachtung kann auch mit der Geschwindigkeit korrespondierende Fahrzustandsgröße des Fahrzeugs herangezogen werden, aus der direkt oder indirekt auch die Fahrzeuggeschwindigkeit geschlossen werden kann. Es kann zum Beispiel über eine Umfeldsensorik ermittelt werden, ob bzw. in welcher Weise sich die Sensorinformationen ändern.

Die Betrachtung der Fahrzeuggeschwindigkeit oder einer korrespondierenden Fahrzustandsgröße reicht grundsätzlich aus, um den Fahrzeugstillstand oder eine niedrige Geschwindigkeit des Fahrzeugs festzustellen. Zusätzlich oder alternativ kann es aber auch zweckmäßig sein, mindestens eine Kenngröße im Fahrzeug zu analysieren, aus der auf einen bestehenden oder bevorstehenden Fahrzeugstillstand geschlossen werden kann. Hierbei können zum Beispiel der Zündungszustand, der Zustand eines Türkontaktschalters, der Zustand einer Sitzbelegungserkennungseinheit oder der Zustand eines Gurtschlosses berücksichtigt werden. Zum Beispiel deutet der Zündungszustand "aus" auf einen Fahrzeugstillstand hin, ebenso eine geöffnete Fahrzeugtür oder ein geöffneter Kofferraumdeckel, was mit einem entsprechenden Kontaktschalter ermittelbar ist. Aus der Sitzbelegungserkennungseinheit kann festgestellt werden, ob der Fahrersitz belegt ist, so dass im Fall eines manuellen Fahrmodus bei einem nicht belegten Fahrersitz auf einen Fahrzeugstillstand geschlossen werden kann. Auch der aktuelle Zustand des Gurtschlosses am Fahrersitz liefert einen zumindest stützenden Hinweis auf die Belegung des Fahrersitzes, wobei ein offenes Gurtschloss auf einen nicht belegten Fahrersitz oder zumindest auf eine Fahrzeugverlassensabsicht des Fahrers schließen lässt.

Die auf den bestehenden oder bevorstehenden Fahrzeugstillstand hinweisenden Kenngrößen können gegebenenfalls mit der Fahrzeuggeschwindigkeit oder der mit der Fahrzeuggeschwindigkeit korrespondierenden Fahrzustandsgröße oder untereinander kombiniert werden, wodurch ein höheres Maß an Sicherheit bei der Erkennung eines bereits erfolgten Fahrzeugstillstands oder eines bevorstehenden Fahrzeugstillstands gewonnen wird.

Es genügt grundsätzlich, genau zwei Steuergeräte und genau einen elektrischen Bremsmotor in der Fahrzeug-Feststellbremse anzuordnen. Die erste Steuergerät/Bremsmotor-Einheit wird in diesem Fall von dem ersten Steuergerät und dem Bremsmotor und die zweite Steuergerät/Bremsmotor-Einheit von dem zweiten Steuergerät und dem Bremsmotor gebildet, so dass der Bremsmotor Bestandteil beider Steuergeräte/Bremsmotor-Einheiten ist. Im Fehlerfall - bei einem Ausfall eines Steuergerätes oder einer Kommunikations- bzw. Energieversorgungsleitung zum Steuergerät - wird auf das andere, intakte Steuergerät umgeschaltet, das gemeinsam mit dem funktionstüchtigen Bremsmotor die zweite Steuergerät/Bremsmotor-Einheit bildet, über die bei Vorliegen der weiteren Bedingungen selbsttätig die Bremskraft erzeugt wird.

Gemäß einer vorteilhaften Ausführung sind insgesamt genau zwei Steuergeräte und genau zwei Bremsmotoren in der Feststellbremse vorhanden. Das erste Steuergerät und ein erster Bremsmotor bilden die erste Steuergerät/Bremsmotor-Einheit, das zweite Steuergerät und der Bremsmotor die zweite Steuergerät/Bremsmotor-Einheit. Im Normalfall - bei vollständig intakter Funktionstüchtigkeit sämtlicher Komponenten der Feststellbremse - kann sowohl über die erste als auch die zweite Steuergerät/Bremsmotor-Einheit eine Bremskraft zum Festsetzen des Fahrzeugs oder zum Abbremsen des Fahrzeugs erzeugt werden. Die beiden Bremsmotoren sitzen vorzugsweise am linken und rechten Fahrzeugrad an einer gemeinsamen Fahrzeugachse.

Hierbei ist es vorteilhaft, dass die Steuergeräte miteinander kommunizieren und Informationen von einem Steuergerät an das andere Steuergerät weitergereicht werden. So ist es beispielsweise möglich, dass das erste Steuergerät ein Master-Steuergerät und das zweite Steuergerät ein Slave-Steuergerät bilden, wobei das Master-Steuergerät bei voller Funktionstüchtigkeit der Komponenten der Feststellbremse den Fahrzeugzustand bzw. Fahrzustand auswertet, beispielsweise die Fahrzeuggeschwindigkeit und den Fahrerwunsch zur Betätigung der Feststellbremse, und diese Informationen an das Slave-Steuergerät weiterleitet, woraufhin beide Steuergeräte/Bremsmotor-Einheiten bevorzugt in synchroner Weise betätigt werden. Hierbei kann die Feststellbremse zum Aufbau von Bremskraft geschlossen, zum Abbau von Bremskraft geöffnet werden oder ohne Ansteuerung bleiben.

Im Fehlerfall, bei dem eine Steuergerät/Bremsmotor-Einheit nicht mehr verfügbar ist oder die Kommunikation zwischen den Steuergeräten gestört ist, wobei die Nichtverfügbarkeit sowohl einen Fehler in einem Steuergerät als auch einen Fehler in einem Bremsmotor betreffen kann, übernimmt die verbleibende, intakte Steuergerät/Bremsmotor-Einheit die selbsttätige Erzeugung von Bremskraft, sofern die Zusatzbedingung im Hinblick auf die Fahrzeuggeschwindigkeit oder den bestehenden bzw. bevorstehenden Fahrzeugstillstand erfüllt ist.

Beispielsweise wird bei einer gestörten Kommunikation zwischen den Steuergeräten nur die Steuergerät/Bremsmotor-Einheit mit dem Master-Steuergerät zur Erzeugung von Bremskraft angesteuert. Alternativ kann bei einer gestörten Kommunikation zwischen den Steuergeräten nur die Steuergerät/Bremsmotor-Einheit mit dem Slave-Steuergerät zur Erzeugung von Bremskraft angesteuert werden, oder, gemäß noch einer weiteren Alternative, sowohl das Master-Steuergerät als auch das Slave-Steuergerät jeweils zur Erzeugung von Bremskraft unabhängig voneinander angesteuert werden.

Liegt ein Fehler in einem Steuergerät oder in einem Bremsmotor vor, so wird die jeweils andere Steuergerät/Bremsmotor-Einheit, welche noch intakt ist, zur selbsttätigen Erzeugung von Bremskraft aktiviert. Hierbei steuert das intakte Steuergerät den ihm zugeordneten, intakten Bremsmotor an.

Sofern die Fahrzeuggeschwindigkeit oder eine hiermit korrespondierende Fahrzustandsgröße für die Entscheidung betrachtet wird, ob bei einem Ausfall einer Steuergerät/Bremsmotor-Einheit selbsttätig über die zweite Steuergerät/Bremsmotor-Einheit Bremskraft erzeugt wird, wird die Information über die Fahrzeuggeschwindigkeit vorzugsweise über eine im Fahrzeug mitgeführte Sensorik ermittelt, beispielsweise die Sensorik eines ESP-Systems (Elektronisches Stabilitätsprogramm).

Die selbsttätige Bremskrafterzeugung wird erst durchgeführt, nachdem eine definierte Zeitspanne seit dem Erkennen des Fahrzeugstillstands verstrichen ist. Mit dieser zeitverzögerten Betätigung der zweiten, intakten Steuergerät/Bremsmotor-Einheit wird der Vorteil erreicht, dass beispielsweise bei Rangiervorgängen die Feststellbremse erst dann eine Bremskraft erzeugt, wenn der Parkvorgang abgeschlossen ist. Dies gilt sowohl für ein vom Fahrer durchgeführtes Einparken als auch für ein automatisiert geführtes Einparken, bei dem sich der Fahrer gegebenenfalls auch außerhalb des Fahrzeugs befinden kann. Durch die zeitverzögerte Aktivierung der Bremskraft können derartige Einparkvorgänge komfortabel durchgeführt werden.

Die Zeitspanne, die seit dem Erkennen des Fahrzeugstillstands verstreichen muss, damit selbsttätige Bremskraft erzeugt wird, kann entweder fest vorgegeben werden, beispielsweise zwei Sekunden betragen, oder in Abhängigkeit weiterer Fahrzustandsgrößen oder sonstiger Kenngrößen im Fahrzeug bestimmt werden. Des Weiteren ist es möglich, diese die Zeitverzögerung darstellende Zeitspanne bei einem vom Fahrer durchgeführten Einparkvorgang und einem automatisierten Einparkvorgang unterschiedlich lang zu gestalten, wobei vorteilhafterweise die Zeitverzögerung bei einem vom Fahrer durchgeführten Einparkvorgang länger ist als bei einem automatisiert durchgeführten Einparkvorgang.

Gemäß noch einer weiteren vorteilhaften Ausführung wird im Anschluss an die selbsttätige Bremskrafterzeugung die Bremskraft auch wieder selbsttätig abgebaut, sofern ein Anfahrwunsch festgestellt wird. Ein derartiger Anfahrwunsch liegt beispielsweise dann vor, falls das Antriebsmoment im Fahrzeug einen zugeordneten Grenzwert übersteigt. Diese Ausführung erhöht die Verfügbarkeit des Fahrzeugs auch für den Fall eines Fehlers in der Fahrzeugfeststellbremse. Die Bremskraft, welche von der Feststellbremse erzeugt wird, wird selbsttätig wieder abgebaut, so dass das Fahrzeug wunschgemäß bewegt werden kann.

Bei einem der Steuergeräte handelt es sich beispielsweise um dasjenige Steuergerät, das Bestandteil der hydraulischen Fahrzeugbremse ist, beispielsweise um das ESP-Steuergerät (Elektronisches Stabilitätsprogramm), über das Ventile in der hydraulischen Fahrzeugbremse und eine hydraulische Pumpe im Bremssystem angesteuert werden können. Das ESP-Steuergerät übernimmt die zusätzliche Funktion als Steuergerät in einer Steuergerät/Bremsmotor-Einheit. Es handelt sich hierbei insbesondere um das Master-Steuergerät.

Bei dem zweiten Steuergerät handelt es sich vorteilhafterweise ebenfalls um ein Steuergerät der hydraulischen Fahrzeugbremse, beispielsweise um ein Steuergerät eines elektrisch betätigbaren Bremskraftverstärkers in der hydraulischen Fahrzeugbremse wie zum Beispiel einem iBooster. Dieses zweite Steuergerät ist Bestandteil der zweiten Steuergerät/Bremsmotor-Einheit und übernimmt insbesondere die Funktion des Slave-Steuergeräts.

Die Erfindung bezieht sich außerdem auf ein Steuergerätesystem bzw. eine Kombination von zumindest zwei Steuergeräten zur Ansteuerung der einstellbaren Komponenten der Feststellbremse, insbesondere der vorzugsweise zwei elektrischen Bremsmotoren.

Des Weiteren bezieht sich die Erfindung auf eine Fahrzeug-Feststellbremse zum Festsetzen des Fahrzeugs im Stillstand mit zumindest zwei Steuergeräten und mindestens einem Bremsmotor, vorzugsweise zwei Bremsmotoren, der bzw. die über ein Steuergerät ansteuerbar sind. Der mindestens eine elektrische Bremsmotor verstellt zur Erzeugung von Bremskraft einen Bremskolben in Richtung auf eine Bremsscheibe.

Die Fahrzeug-Feststellbremse kann Bestandteil eines Bremssystems für ein Fahrzeug sein, das außerdem eine hydraulische Fahrzeugbremse umfasst. Vorteilhafterweise wirken der hydraulische Bremsdruck der Fahrzeugbremse und der elektrische Bremsmotor der Feststellbremse auf den gleichen Bremskolben.

Des Weiteren bezieht sich die Erfindung auf ein Fahrzeug mit einer vorbeschriebenen Fahrzeug-Feststellbremse. In einer weiteren Ausführung bezieht sich die Erfindung auf ein Fahrzeug mit einem Bremssystem, das eine hydraulische Fahrzeugbremse und die vorbeschriebene Fahrzeug-Feststellbremse umfasst.

Die Erfindung bezieht sich außerdem auf ein Computerprogrammprodukt mit einem Programmcode, der dazu ausgelegt ist, die vorbeschriebenen Verfahrensschritte auszuführen. Das Computerprogrammprodukt läuft in den Steuergeräten ab.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer hydraulischen Fahrzeugbremse mit Radbremseinheiten, die zusätzlich mit einem elektrischen Bremsmotor als Teil einer Feststellbremse ausgestattet sind,
- Fig. 2: einen Schnitt durch eine Feststellbremse mit einem elektrischen Bremsmotor,
- Fig. 3: eine Prinzipdarstellung der Feststellbremse mit zwei elektrischen Bremsmotoren und jeweils einem Steuergerät,
- Fig. 4: ein Ablaufschema mit Verfahrensschritten zum Erzeugen von Bremskraft durch Betätigen der Feststellbremse, wenn eine Komponente der Feststellbremse ausgefallen ist.

In den Figuren sind gleiche Bauteile mit gleichen Bezugszeichen versehen.

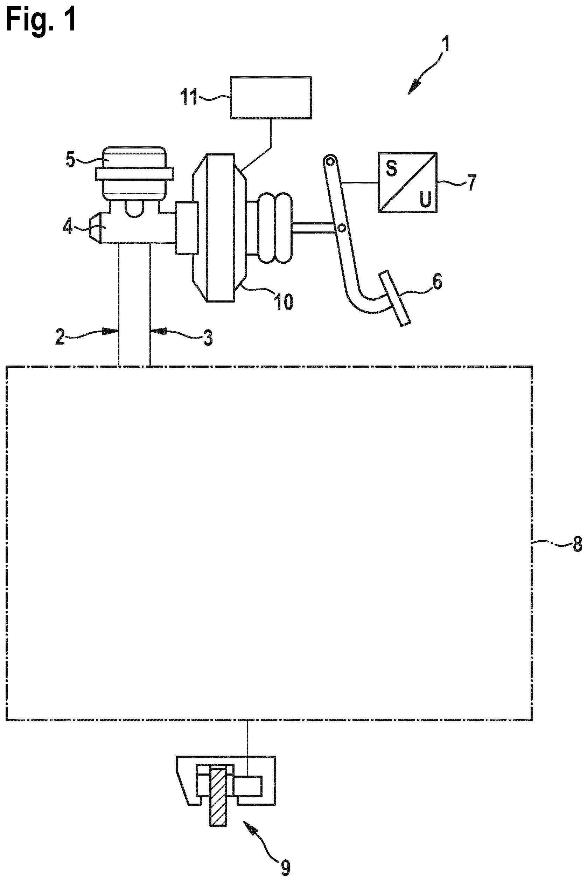

Das in Fig. 1 dargestellte Bremssystem für ein Fahrzeug umfasst eine hydraulische Fahrzeugbremse 1 mit einem Vorderachs-Bremskreis 2 und einem Hinterachs-Bremskreis 3 zur Versorgung und Ansteuerung von Radbremseinheiten 9 an jedem Rad des Fahrzeugs mit einem unter Hydraulikdruck stehenden Bremsfluid. Die Bremskreise können auch als zwei Diagonalbremskreise mit jeweils einem Vorderrad und einem diagonal dazu angeordneten Hinterrad ausgebildet sein.

Die beiden Bremskreise 2, 3 sind an einen gemeinsamen Hauptbremszylinder 4 angeschlossen, der als Tandemzylinder ausgeführt ist und über einen Bremsflüssigkeitsvorratsbehälter 5 mit Bremsfluid versorgt wird. Der Hauptbremszylinderkolben innerhalb des Hauptbremszylinders 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein Bremskraftverstärker 10, der beispielsweise einen Elektromotor umfasst, welcher über ein Getriebe den Hauptbremszylinder 4 betätigt (iBooster). Der Bremskraftverstärker 10 stellt eine aktive Bremskomponente zur Beeinflussung des hydraulischen Bremsdrucks dar.

Die vom Pedalwegsensor 7 gemessene Stellbewegung des Bremspedals 6 wird als Sensorsignal an ein Steuergerät 11 des Bremssystems übermittelt, in welchem Stellsignale zur Ansteuerung des Bremskraftverstärkers 10 erzeugt werden. Die Versorgung der Radbremseinheiten 9 mit Bremsfluid erfolgt in jedem Bremskreis 2, 3 über verschiedene Schaltventile, die gemeinsam mit weiteren Aggregaten Teil einer Bremshydraulik 8 sind. Zur Bremshydraulik 8 gehört des Weiteren eine Hydraulikpumpe, die Bestandteil eines elektronischen Stabilitätsprogramms (ESP) ist, dem ein weiteres Steuergerät zugeordnet ist. Auch die Hydraulikpumpe ist eine aktive Bremskomponente zur Beeinflussung des hydraulischen Bremsdrucks.

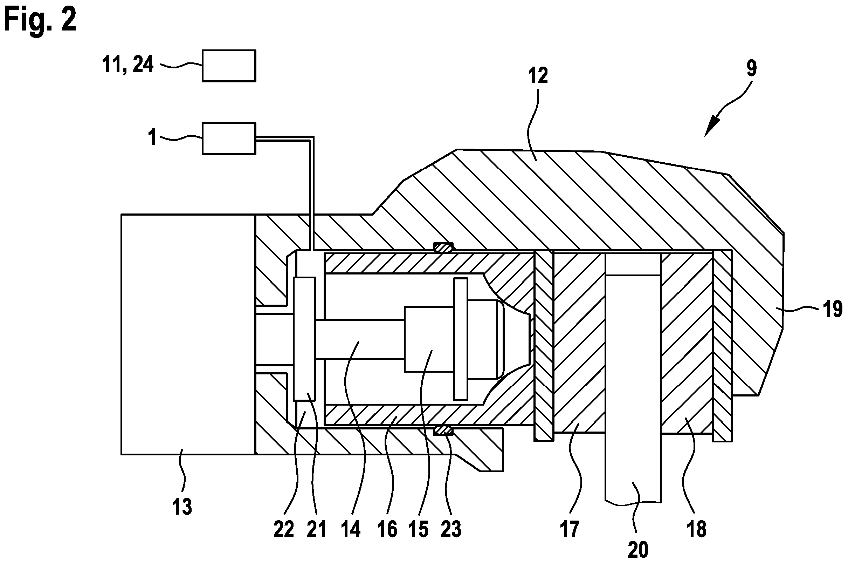

In Fig. 2 ist eine Radbremseinheit 9, die an Rädern an der Hinterachse des Fahrzeugs angeordnet ist, im Detail dargestellt. Die Radbremseinheit 9 ist Teil der hydraulischen Fahrzeugbremse 1 und wird aus dem Hinterachs-Bremskreis mit Bremsfluid 22 versorgt. Die Radbremseinheit 9 weist außerdem eine elektromechanische Bremsvorrichtung auf, die Teil einer Feststell- bzw. Parkbremse zum Festsetzen eines Fahrzeugs ist, jedoch auch bei einer Bewegung des Fahrzeugs, insbesondere bei kleineren Fahrzeuggeschwindigkeiten unterhalb eines Geschwindigkeits-Grenzwerts zum Abbremsen des Fahrzeugs eingesetzt werden kann. Derartige Radbremseinheiten 9 können gegebenenfalls auch an den Rädern der Vorderachse des Fahrzeugs angeordnet sein.

Die elektromechanische Bremsvorrichtung umfasst einen Bremssattel 12 mit einer Zange 19, welche eine Bremsscheibe 20 übergreift. Als Stellglied weist die Bremsvorrichtung eine Motor-Getriebe-Einheit mit einem Gleichstrom-Elektromotor als Bremsmotor 13 auf, dessen Rotorwelle eine Spindel 14 rotierend antreibt, auf der eine Spindelmutter 15 rotationsfest gelagert ist. Bei einer Rotation der Spindel 14 wird die Spindelmutter 15 axial verstellt. Die Spindelmutter 15 bewegt sich innerhalb eines Bremskolbens 16, der Träger eines Bremsbelags 17 ist, welcher von dem Bremskolben 16 gegen die Bremsscheibe 20 gedrückt wird. Auf der gegenüberliegenden Seite der Bremsscheibe 20 befindet sich ein weiterer Bremsbelag 18, der ortsfest an der Zange 19 gehalten ist. Der Bremskolben 16 ist auf seiner Außenseite über einen umgreifenden Dichtring 23 druckdicht gegenüber dem aufnehmenden Gehäuse abgedichtet.

Innerhalb des Bremskolbens 16 kann sich die Spindelmutter 15 bei einer Drehbewegung der Spindel 14 axial nach vorne in Richtung auf die Bremsscheibe 20 zu bzw. bei einer entgegen gesetzten Drehbewegung der Spindel 14 axial nach hinten bis zum Erreichen eines Endanschlags 21 bewegen.

Zum Erzeugen einer Klemmkraft beaufschlagt die Spindelmutter 15 die innere Stirnseite des Bremskolbens 16, wodurch der axial verschieblich in der Bremsvorrichtung gelagerte Bremskolben 16 mit dem Bremsbelag 17 gegen die zugewandte Stirnfläche der Bremsscheibe 20 gedrückt wird. Die Spindelmutter 15 stellt ein Übertragungsglied zwischen dem Bremsmotor und dem Bremskolben dar.

Für die hydraulische Bremskraft wirkt auf den Bremskolben 16 der hydraulische Druck des Bremsfluids 22 aus der hydraulischen Fahrzeugbremse 1. Der hydraulische Druck kann auch im Fahrzeugstillstand bei Betätigung der elektromechanischen Bremsvorrichtung unterstützend wirksam sein, so dass sich die Gesamt-Bremskraft aus dem elektromotorisch gestellten Anteil und dem hydraulischen Anteil zusammensetzt. Während der Fahrt des Fahrzeugs ist entweder nur die hydraulische Fahrzeugbremse aktiv oder sowohl die hydraulische Fahrzeugbremse als auch die elektromechanische Bremsvorrichtung oder nur die elektromechanische Bremsvorrichtung, um Bremskraft zu erzeugen. Die Stellsignale zur Ansteuerung sowohl der einstellbaren Komponenten der hydraulischen Fahrzeugbremse 1 als auch der elektromechanischen Bremsvorrichtung werden in dem Steuergerät 11, 24 erzeugt, bei dem es sich um das Steuergerät 11 des Bremskraftverstärkers 10 (iBooster) bzw. um das ESP-Steuergerät 24 handelt.

Die Feststellbremse umfasst jeweils eine elektromechanische Bremsvorrichtung gemäß Fig. 2 an den beiden Hinterrädern des Fahrzeugs. Einer Bremsvorrichtung, beispielsweise am linken Hinterrad, ist das ESP-Steuergerät 24 zugeordnet, der anderen Bremsvorrichtung das Steuergerät 11 des Bremskraftverstärkers 10.

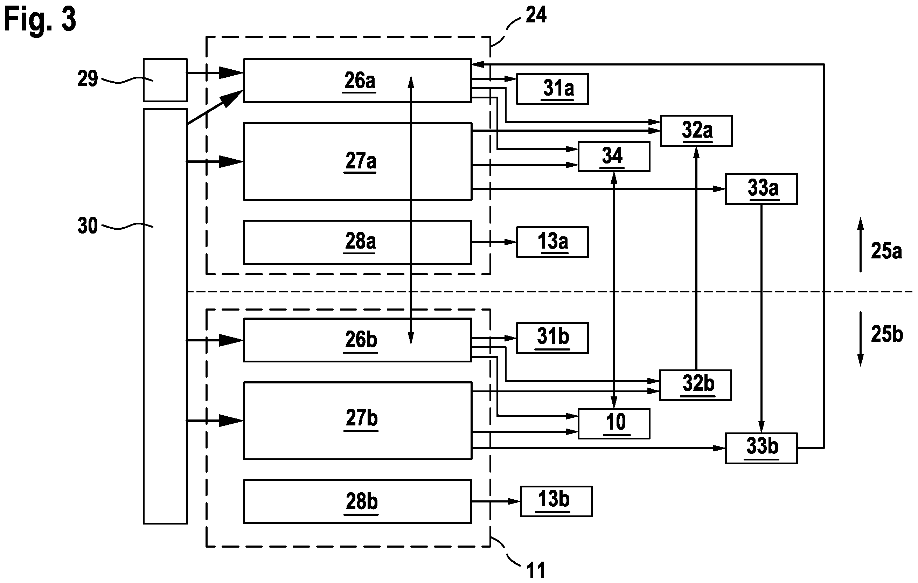

In Fig. 3 ist die Feststellbremse schematisch dargestellt. Die Feststellbremse umfasst die beiden elektromechanischen Bremsvorrichtungen 25a und 25b am linken und rechten Hinterrad des Fahrzeugs, wobei zu jeder elektromechanischen Bremsvorrichtung 25a, 25b jeweils ein elektrischer Bremsmotor 13a, 13b gehört. Bei der Bremsvorrichtung 25a handelt es sich beispielsweise um die Bremsvorrichtung am linken Hinterrad und bei der Bremsvorrichtung 25b um die Bremsvorrichtung am rechten Hinterrad des Fahrzeugs.

Zur Bremsvorrichtung 25a gehört das ESP-Steuergerät 24, zur Bremsvorrichtung 25b das iBooster-Steuergerät 11, um die jeweiligen Bremsmotoren 13a bzw. 13b anzusteuern. Jedes Steuergerät 11, 24 umfasst eine Stillstandsmanagementeinheit 26a, 26b, eine Logikeinheit 27a, 27b sowie eine Hardwareeinheit 28a, 28b. Die Stillstandsmanagementeinheit 26a, 26b empfängt Signale von weiteren Einheiten 29 und 30 im Fahrzeug, wobei es sich bei der Einheit 29 um einen Feststellbremsen-Schalter und bei der Einheit 30 um eine Fahrzeug- bzw. Fahrzeug-Umfeldsensorik handelt. Die Stillstandsmanagementeinheit 26a im ESP-Steuergerät 24 empfängt sowohl Signale des Feststellbremsen-Schalters 29 als auch der Sensorik 30. Die Stillstandsmanagementeinheit 26b des iBooster-Steuergerätes 11 empfängt dagegen nur Signale der Sensorik 30, nicht jedoch des Feststellbremsen-Schalters 29.

Die Logikeinheit 27a, 27b im Steuergerät 11, 24 enthält die Ansteuerungslogik zur Ansteuerung der jeweiligen Bremsmotoren 13a, 13b und ist insbesondere als Software in den Steuergeräten realisiert.

Die Hardwareeinheiten 28a, 28b umfassen die Leistungselektronik zur Beaufschlagung der Bremsmotoren 13a, 13b, beispielsweise H-Brücken.

Über eine Betätigung des Feststellbremsen-Schalters 29 kann der Fahrer manuell ein Auslösesignal zur Aktivierung der Feststellbremse mit beiden elektromechanischen Bremsvorrichtungen 25a und 25b erzeugen. Das Auslösesignal des Feststellbremsen-Schalters 29 wird der Stillstandsmanagementeinheit 26a im ESP-Steuergerät 24 als Eingangssignal zugeführt. Das Auslösesignal wird im Normalfall - bei voller Funktionstüchtigkeit beider Steuergeräte 11, 24 - von der Stillstandsmanagementeinheit 26a des ESP-Steuergerätes 24 zu der Stillstandsmanagementeinheit 26b des iBooster-Steuergerätes 11 übertragen, so dass das Auslösesignal in beiden Steuergeräten 11, 24 zur Verfügung steht und entsprechend über beide Steuergeräte 11, 24 die betreffenden elektrischen Bremsmotoren 13a, 13b angesteuert werden.

Bei einem Ausfall eines Steuergerätes fällt entsprechend auch der jeweilige Bremsmotor aus, es bleibt jedoch die Funktionalität der jeweils anderen elektromechanischen Bremsvorrichtung erhalten, sofern das zweite Steuergerät intakt bleibt.

Bei einem Ausfall des iBooster-Steuergerätes 11 wird die erste elektromechanische Bremsvorrichtung 25a bei Vorliegen eines Auslösesignals vom ESP-Steuergerät 24 angesteuert, das über die Leistungselektronik 28a den elektrischen Bremsmotor 13a beaufschlagt.

Bei einem Ausfall des ESP-Steuergerätes 24 kann der zweite elektrische Bremsmotor 13b der zweiten elektromechanischen Bremsvorrichtung 25b von dem iBooster-Steuergerät 11 gesteuert werden. Allerdings steht in diesem Fall das Auslösesignal des Feststellbremsen-Schalters 29 nicht zur Verfügung, so dass ein alternatives Auslösesignal erzeugt werden muss, das aus der Fahrzeug- bzw. Fahrzeugumfeldsensorik 30 gewonnen wird. Beispielsweise können Informationen über den Fahrzeugstillstand vom Antriebsmotor des Fahrzeugs oder aus der Umfeldsensorik gewonnen und als Auslösesignal herangezogen werden.

Gegebenenfalls umfasst die Sensorik 30 auch ein weiteres Eingabesystem im Fahrzeug, beispielsweise einen berührempfindlichen Bildschirm, über den der Fahrer unabhängig von dem Feststellbremsen-Schalter 29 die Aktuierung der Feststellbremse auslösen kann.

Über die Steuergeräte 11, 24 sind außerdem noch verschiedene weitere Einheiten ansteuerbar. Beispielsweise können Bremslichter 31a, 31b bei einer Betätigung einer oder beider elektromechanischer Bremsvorrichtungen 25a, 25b betätigt werden. Eine weitere Kommunikation zwischen den Bremsvorrichtungen 25a, 25b findet über Schnittstelleneinheiten 32a, 32b statt. Jedes Steuergerät liefert außerdem Informationen an jeweils eine Diagnoseeinheit 33a, 33b. Bei einem automatisch durchzuführenden Einparkvorgang oder gegebenenfalls auch bei sonstigen Bremsvorgängen kann über das ESP-Steuergerät 24 eine hydraulische Bremskraftunterstützung über die ESP-Pumpe 34 und über das iBooster-Steuergerät 11 eine elektromechanische Unterstützung über den Bremskraftverstärker bzw. iBooster 10 erfolgen.

Jeweils ein Steuergerät 11, 24 bildet mit einem zugeordneten Bremsmotor 13 eine Steuergerät/Bremsmotor-Einheit zur Erzeugung von Bremskraft, insbesondere zum Festsetzen des Fahrzeugs im Stillstand. Bei einem Ausfall einer Steuergerät/Bremsmotor-Einheit kann die verbleibende, intakte Steuergerät/Bremsmotor-Einheit Bremskraft erzeugen. Der Ausfall in einer der Steuergerät/Bremsmotor-Einheiten kann sowohl das zugehörige Steuergerät als auch den zugehörigen Bremsmotor umfassen. Außerdem ist es möglich, dass die Kommunikation zwischen den Steuergeräten 11, 24 unterbrochen ist, so dass kein Signal vom Steuergerät 24 zum Steuergerät 11 übertragen werden kann.

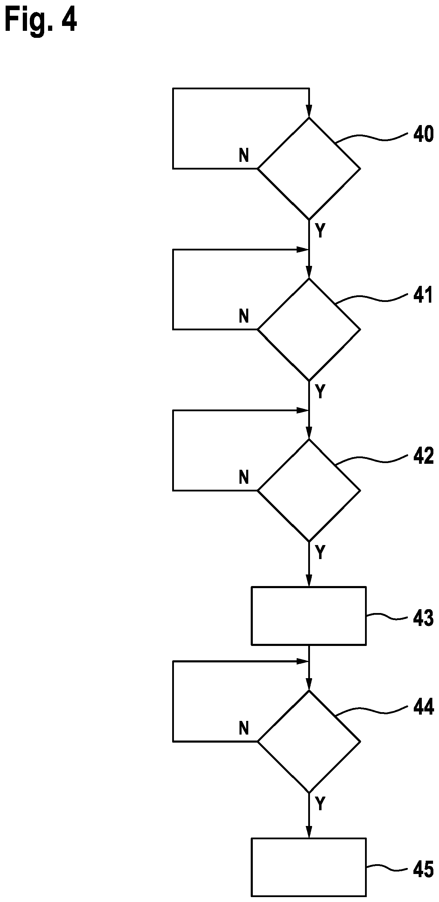

In Fig. 4 ist im Detail ein Ablaufschema mit verschiedenen Verfahrensschritten zum Erzeugen von Bremskraft durch Betätigen der Feststellbremse für den Fall dargestellt, dass eine Steuergerät/Bremsmotor-Einheit oder die Kommunikation zwischen den Steuergeräten ausgefallen ist. Bei dem Verfahren wird die verbleibende Steuergerät/Bremsmotor-Einheit selbsttätig aktiviert, sofern die Fahrzeuggeschwindigkeit einen Grenzwert unterschreitet oder eine Kenngröße im Fahrzeug auf einen bestehenden oder bevorstehenden Fahrzeugstillstand hinweist.

Gemäß Fig. 4 wird zunächst in einem ersten Verfahrensschritt 40 überprüft, ob eine Steuergerät/Bremsmotor-Einheit ausgefallen ist oder die Kommunikation zwischen den Steuergeräten unterbrochen ist. Der Ausfall einer Steuergerät/Bremsmotor-Einheit kann sowohl den Ausfall eines Steuergerätes als auch den Ausfall eines Bremsmotors bzw. Unterbrechung in der Signal- und Stromübertragung betreffen. Ergibt die Abfrage im ersten Verfahrensschritt 40, dass tatsächlich ein Ausfall einer Steuergerät/Bremsmotor-Einheit oder eine Unterbrechung der Kommunikation zwischen Steuergerät vorliegt, wird der Ja-Verzweigung ("Y") folgend zum nächsten Verfahrensschritt 41 vorgerückt. Andernfalls liegt die volle Funktionstüchtigkeit vor, und es wird der Nein-Verzweigung ("N") folgend wieder zur Abfrage gemäß Verfahrensschritt 40 zurückgekehrt, die in zyklischen Abständen erneut durchlaufen wird.

Im Verfahrensschritt 41, der bei einer Störung in der Feststellbremse durchlaufen wird, erfolgt die Abfrage, ob die Fahrzeuggeschwindigkeit oder eine korrespondierende Fahrzustandsgröße einen zugeordneten Grenzwert unterschreitet. Der Grenzwert liegt vorteilhafterweise in einer Größenordnung von maximal 10 km/h.

Zusätzlich oder alternativ zum Betrachten der Fahrzustandsgröße kann auch eine Kenngröße betrachtet werden, die auf einen bestehenden oder bevorstehenden Fahrzeugstillstand hinweist, beispielsweise der Zündungszustand des Antriebsmotors im Fahrzeug, der Zustand eines Türkontaktschalters, insbesondere an der Fahrertür, der Zustand einer Sitzbelegungserkennungseinheit für den Fahrersitz oder der Zustand eines Gurtschlosses für den Fahrergurt. Es ist auch möglich, den Zustand eines Kontaktschalters am Kofferraum zu berücksichtigen. Weist die entsprechende Kenngröße auf ein stillstehendes Fahrzeug oder einen bevorstehenden Fahrzeugstillstand hin, beispielsweise bei geöffneter Fahrertür oder geöffnetem Kofferraumdeckel, so kann diese Information ebenfalls für das erfindungsgemäße Verfahren zum selbsttätigen Ansteuern der intakten Steuergerät/Bremsmotor-Einheit verwendet werden. In bevorzugter Ausführung wird sowohl die Fahrzeuggeschwindigkeit auf Unterschreiten des zugeordneten Grenzwerts überprüft als auch eine oder mehrere Kenngrößen berücksichtigt, die auf einen bestehenden oder bevorstehenden Fahrzeugstillstand hinweisen. Dadurch wird die Sicherheit und Plausibilität im Hinblick auf das selbsttätige Erzeugen von Bremskraft erhöht.

Ergibt die Abfrage im Schritt 41, dass die Fahrzeuggeschwindigkeit nicht unter den zugeordneten Grenzwert gefallen ist und/oder die betrachteten Kenngrößen im Fahrzeug nicht auf einen bestehenden oder bevorstehenden Fahrzeugstillstand hinweisen, wird der Nein-Verzweigung folgend wieder zum Beginn des Verfahrensschrittes 41 zurückgekehrt und dieser Schritt in zyklischen Abständen erneut durchlaufen. Andernfalls, bei Erfüllen der einen Bedingung oder der verschiedenen Bedingungen im Schritt 41, wird der Ja-Verzweigung folgend zum nächsten Schritt 42 vorgerückt.

Falls der Ja-Ausgang der Abfrage im Verfahrensschritt 41 erreicht ist, liegen prinzipiell die Bedingungen vor, dass die intakte Steuergerät/Bremsmotor-Einheit selbsttätig aktiviert und die Bremskraft erzeugt werden kann. Aus Komfortgründen wird jedoch noch eine Zeitvergrößerung berücksichtigt, die Gegenstand des Verfahrensschrittes 42 ist. Hierbei wird eine definierte Zeitspanne nach dem Erkennen des Fahrzeugstillstands abgewartet, bevor die Bremskraft durch die Ansteuerung der Steuergerät/Bremsmotor-Einheit selbsttätig erzeugt wird. Mit dem Abwarten der Zeitspanne im Verfahrensschritt 42 wird ein höheres Maß an Fahrkomfort insbesondere während eines Einpark- oder Ausparkvorgangs im Fahrzeug erreicht.

Ergibt die Abfrage im Schritt 42, dass eine definierte Zeitspanne noch nicht verstrichen ist, wird der Nein-Verzweigung folgend wieder zum Beginn des Schrittes 42 zurückgekehrt und dieser Schritt 42 in zyklischen Abständen erneut durchlaufen. Ergibt dagegen die Abfrage, dass die definierte Zeitspanne abgelaufen ist, wird der Ja-Verzweigung folgend zum nächsten Verfahrensschritt 43 vorgerückt, in welchem die intakte Steuergerät/Bremsmotor-Einheit aktiviert und Bremskraft selbsttätig erzeugt wird.

Im folgenden Verfahrensschritt 44 werden Bedingungen abgefragt, die zu einem Abbruch der Bremskrafterzeugung durch die Feststellbremse führen. Die selbsttätige Bremskrafterzeugung durch die Feststellbremse wird auch selbsttätig wieder abgebaut, wenn eine oder mehrere entsprechende Abbruchbedingungen erfüllt sind, die in Verfahrensschritt 44 abgeprüft werden. Es handelt sich hierbei zum Beispiel um das Antriebsmoment des Antriebsmotors im Fahrzeug. Sofern das Antriebsmoment einen zugeordneten Grenzwert nicht übersteigt, bleibt die Bremskraft der Feststellbremse aufrechterhalten, und es wird der Nein-Verzweigung folgend wieder zum Beginn der Abfrage gemäß Schritt 44 zurückgekehrt und die Abfrage in zyklischen Abständen erneut durchlaufen. Ergibt dagegen die Abfrage im Schritt 44, dass das Antriebsmoment den zugeordneten Grenzwert übersteigt, muss davon ausgegangen werden, dass die Fahrzeugfahrt wieder aufgenommen werden soll, woraufhin der Ja-Verzweigung folgend zum Schritt 45 vorgerückt und die Bremskraft der Feststellbremse selbsttätig wieder abgebaut wird.

## Patentansprüche

1. Verfahren zum Erzeugen von Bremskraft durch Betätigen mindestens eines elektrischen Bremsmotors in einer Fahrzeug-Feststellbremse, die zumindest zwei Steuergeräte (11, 24) zur Ansteuerung mindestens eines Bremsmotors (13) umfasst, wobei bei einem Ausfall einer ersten Steuergerät/Bremsmotor-Einheit selbsttätig eine zweite Steuergerät/Bremsmotor-Einheit zur Erzeugung von Bremskraft aktiviert wird, falls die Fahrzeuggeschwindigkeit oder eine korrespondierende Fahrzustandsgröße einen zugeordneten Grenzwert unterschreitet und/oder eine Kenngröße im Fahrzeug auf einen bestehenden oder bevorstehenden Fahrzeugstillstand hinweist, **dadurch gekennzeichnet dass** die selbsttätige Bremskrafterzeugung erst durchgeführt wird, nachdem eine definierte Zeitspanne seit dem Erkennen des Fahrzeugstillstands verstrichen ist.

2. Verfahren nach Anspruch 1, **dadurch gekennzeichnet, dass** ein erstes Steuergerät (24) und ein erster Bremsmotor (13) die erste Steuergerät/Bremsmotor-Einheit und ein zweites Steuergerät (11) und ein zweiter Bremsmotor (13) die zweite Steuergerät/Bremsmotor-Einheit bilden.

3. Verfahren nach Anspruch 1 oder 2, **dadurch gekennzeichnet, dass** das erste Steuergerät (24) ein Master-Steuergerät und das zweite Steuergerät (11) ein Slave-Steuergerät bilden, wobei das Master-Steuergerät (24) nach Auswertung des Fahrzeugzustands die Information über die Ansteuerung an das Slave-Steuergerät (11) weiterleitet.

4. Verfahren nach einem der Ansprüche 1 bis 3, **dadurch gekennzeichnet, dass** die auf den bestehenden oder bevorstehenden Fahrzeugstillstand hinweisende Kenngröße der Zündungszustand, der Zustand eines Türkontaktschalters, der Zustand einer Sitzbelegungserkennungseinheit und/oder der Zustand eines Gurtschlosses ist.

5. Verfahren nach einem der Ansprüche 1 bis 4, **dadurch gekennzeichnet, dass** zur Erkennung des bestehenden oder bevorstehenden Fahrzeugstillstands sowohl die Fahrzeuggeschwindigkeit oder eine korrespondierende Fahrzustandsgröße einen Grenzwert unterschreitet und darüber hinaus mindestens eine Kenngröße einen auf den bestehenden oder bevorstehenden Fahrzeugstillstand hinweisenden Wert einnimmt.

6. Verfahren nach einem der Ansprüche 1 bis 5, **dadurch gekennzeichnet, dass** im Anschluss an die die selbsttätige Bremskrafterzeugung die Bremskraft selbsttätig wieder abgebaut wird, wenn ein Anfahrwunsch festgestellt wird.

7. Verfahren nach Anspruch 6, **dadurch gekennzeichnet, dass** ein Anfahrwunsch vorliegt, falls ein Antriebsmoment im Fahrzeug einen zugeordneten Grenzwert übersteigt.

8. Kombination von zumindest zwei Steuergeräten, die zur Ansteuerung der einstellbaren Komponenten der Fahrzeug-Feststellbremse zur Durchführung des Verfahrens nach einem der Ansprüche 1 bis 7 ausgelegt ist.

9. Fahrzeug-Feststellbremse zum Festsetzen eines Fahrzeugs im Stillstand, mit zumindest zwei Steuergeräten (11, 24) nach Anspruch 8 und mindestens einem Bremsmotor (13), der über mindestens ein Steuergerät (11, 24) ansteuerbar ist, wobei der mindestens eine elektrische Bremsmotor (13) einen Bremskolben (16) in Richtung auf eine Bremsscheibe (20) verstellt.

10. Bremssystem für ein Fahrzeug mit einer hydraulischen Fahrzeugbremse (1) und mit einer Fahrzeug-Feststellbremse nach Anspruch 9.

11. Fahrzeug mit einem Bremssystem nach Anspruch 10.

12. Fahrzeug mit einer Fahrzeug-Feststellbremse nach Anspruch 9.

13. Computerprogrammprodukt mit einem Programmcode, der dazu ausgelegt ist, Schritte des Verfahrens nach einem der Ansprüche 1 bis 7 auszuführen, wenn das Computerprogrammprodukt in den Steuergeräten gemäß Anspruch 8 abläuft.

## Claims

1. Method for generating braking power by actuating at least one electric braking motor in a vehicle parking brake comprising at least two control units (11, 24) for controlling at least one braking motor (13), wherein in the event of a failure of a first control unit/braking motor unit a second control unit/braking motor unit is automatically activated for the generation of braking power if the vehicle speed or a corresponding driving state variable is less than an assigned limit value and/or a characteristic variable in the vehicle indicates an existing or imminent vehicle standstill, **characterized in that** the automatic braking power generation is carried out only after a defined period of time has elapsed since the detection of the vehicle standstill.

2. Method according to Claim 1, **characterized in that** a first control unit (24) and a first braking motor (13) form the first control unit/braking motor unit and a second control unit (11) and a second braking motor (13) form the second control unit/braking motor unit.

3. Method according to Claim 1 or 2, **characterized in that** the first control unit (24) forms a master control unit and the second control unit (11) forms a slave control unit, wherein after evaluation of the vehicle state the master control unit (24) forwards the information about the control to the slave control unit (11).

4. Method according to any one of Claims 1 to 3, **characterized in that** the characteristic variable indicating the existing or imminent vehicle standstill is the ignition state, the state of a door contact switch, the state of a seat occupancy detection unit and/or the state of a belt lock.

5. Method according to any one of Claims 1 to 4, **characterized in that**, in order to detect the existing or imminent vehicle standstill, both the vehicle speed or a corresponding driving state variable is below a limit value and in addition at least one characteristic variable adopts a value indicating the existing or imminent vehicle standstill.

6. Method according to any one of Claims 1 to 5, **characterized in that**, following the automatic braking power generation, the braking power is automatically removed again if a wish to drive off is detected.

7. Method according to Claim 6, **characterized in that** there is a wish to drive off if a drive torque in the vehicle exceeds an assigned limit value.

8. Combination of at least two control units which is designed to control the adjustable components of the vehicle parking brake for carrying out the method according to any one of Claims 1 to 7.

9. Vehicle parking brake for holding a vehicle at a standstill, with at least two control units (11, 24) according to Claim 8 and at least one braking motor (13) that can be controlled by at least one control unit (11, 24), wherein the at least one electric braking motor (13) displaces a brake piston (16) towards a brake disc (20).

10. Braking system for a vehicle with a hydraulic vehicle brake (1) and a vehicle parking brake according to Claim 9.

11. Vehicle with a braking system according to Claim 10.

12. Vehicle with a vehicle parking brake according to Claim 9.

13. Computer program product with a program code designed to perform steps of the method according to any one of Claims 1 to 7 when the computer program product is run in the control units according to Claim 8.

## Revendications

1. Procédé permettant de générer une force de freinage par l'actionnement d'au moins un moteur de frein électrique dans un frein de stationnement de véhicule qui comprend au moins deux appareils de commande (11, 24) pour piloter au moins un moteur de frein (13), dans lequel, en cas de défaillance d'un premier ensemble appareil de commande/moteur de frein, un deuxième ensemble appareil de commande/moteur de frein est activé de manière autonome pour générer une force de freinage si la vitesse du véhicule ou une grandeur d'état de conduite correspondante est inférieure à une valeur limite associée, et/ou une grandeur caractéristique dans le véhicule indique un arrêt du véhicule avéré ou imminent,
**caractérisé en ce que** la génération autonome d'une force de freinage n'est effectuée qu'après expiration d'un délai défini depuis l'identification de l'arrêt du véhicule.

2. Procédé selon la revendication 1, **caractérisé en ce qu'**un premier appareil de commande (24) et un premier moteur de frein (13) constituent le premier ensemble appareil de commande/moteur de frein, et un deuxième appareil de commande (11) et un deuxième moteur de frein (13) constituent le deuxième ensemble appareil de commande/moteur de frein.

3. Procédé selon la revendication 1 ou 2, **caractérisé en ce que** le premier appareil de commande (24) est un appareil de commande maître et le deuxième appareil de commande (11) est un appareil de commande esclave,
dans lequel l'appareil de commande maître (24) retransmet l'information concernant le pilotage à l'appareil de commande esclave (11) après une évaluation de l'état du véhicule.

4. Procédé selon l'une quelconque des revendications 1 à 3, **caractérisé en ce que** la grandeur caractéristique indiquant l'arrêt du véhicule avéré ou imminent est l'état d'allumage, l'état d'un contacteur de portière, l'état d'une unité d'identification d'occupation des sièges et/ou l'état d'une boucle de ceinture.

5. Procédé selon l'une quelconque des revendications 1 à 4, **caractérisé en ce que** pour identifier l'arrêt du véhicule avéré ou imminent, à la fois la vitesse du véhicule ou une grandeur d'état du véhicule correspondante est inférieure à une valeur limite, et en plus au moins une grandeur caractéristique adopte une valeur indiquant l'arrêt du véhicule avéré ou imminent.

6. Procédé selon l'une quelconque des revendications 1 à 5, **caractérisé en ce que** suite à la génération autonome d'une force de freinage, la force de freinage est à nouveau réduite de manière autonome si un souhait de démarrage est constaté.

7. Procédé selon la revendication 6, **caractérisé en ce qu'**un souhait de démarrage est présent si un couple d'entraînement dans le véhicule dépasse une valeur limite associée.

8. Combinaison d'au moins deux appareils de commande, qui est conçue pour piloter les composants réglables du frein de stationnement de véhicule pour exécuter le procédé selon l'une quelconque des revendications 1 à 7 .

9. Frein de stationnement de véhicule pour immobiliser un véhicule à l'arrêt, comprenant au moins deux appareils de commande (11, 24) selon la revendication 8 et au moins un moteur de frein (13) qui peut être piloté par l'intermédiaire d'au moins un appareil de commande (11, 24), dans lequel ledit au moins un moteur de frein électrique (13) ajuste un piston de frein (16) en direction d'un disque de frein (20) .

10. Système de freinage pour un véhicule comprenant un frein de véhicule hydraulique (1) et un frein de stationnement de véhicule selon la revendication 9.

11. Véhicule comprenant un système de freinage selon la revendication 10.

12. Véhicule comprenant un frein de stationnement de véhicule selon la revendication 9.

13. Produit de programme informatique comprenant du code programme qui est conçu pour exécuter les étapes du procédé selon l'une quelconque des revendications 1 à 7 si le produit de programme informatique est exécuté sur les appareils de commande selon la revendication 8.
